# EUROPEAN PATENT APPLICATION

(11) **EP 3 364 722 A1**
(43) Date of publication of application: **22.08.2018**
(21) Application number: 17157268.8
(22) Date of filing: 21.02.2017
(51) Int. Cl.: H05B 33/08

(54) **CURRENT SPLITTING ADAPTER FOR A TOWER SYSTEM OF LED MODULES**

(71) Applicant: General Led Inc., San Antonio, TX 78216 (US)
(72) Inventor: HUANG, Michelle Kun, San Antonio, TX 78216 (US); MOYA, Steven A, San Antonio, TX 78216 (US)
(74) Representative: Ashton, Timothy

(57) **Abstract**

A current splitting adapter for use in a power system of LED modules. The current splitter takes the single DC electrical energy output and splits the current into two electrical channels. The LED modules are connected in a daisy-chain using three pin connectors with an end plug at the end of the chain. An end plug takes the outputs from the LEDs in the last LED module and combines them with a common conductor. The end plug completes the circuit by connecting a common conductor to a common wire that runs from the power source through all the LED modules.

## Description

### 1. Field of the Invention

The present invention pertains to internally-illuminated signage and illumination of such signage through the use of LED modules. More particularly, the present invention relates to signage lighting configurations connecting conventional direct current electrical energy power supplies to LED configurations with one or more sets of series-connected LED modules.

### 2. Description of Related Prior Art

Those of ordinary skill in the art will understand that direct current (DC) supply of electrical energy to an LED is superior to alternating current (AC) because it minimizes the undesirable flickering of light which is known to occur when the electrical energy supplied to an LED is a source of AC electrical energy. Specifically, a constant amount of DC electrical energy applied to an individual LED causes the individual LED to emit a stable, non-flickering output of visible light.

Because individual LEDs emit a stable, non-flickering output of visible light when a direct current (DC) is applied to the individual LED, it becomes necessary to transform commonly available sources of AC electrical energy into DC supplies of electrical energy. Typically, such transformation of AC electrical energy into DC electrical energy is accomplished by the use of a DC electrical energy power supply. A power supply may also be referred to generally as a "driver" in this description. This DC electrical energy power supply takes the alternating current (AC) electrical energy from the AC electrical line as input, conventionally 110 volt AC/60 Hz, or 220 volt AC/50 Hz, and converts the input of alternating current (AC) into direct current (DC) electrical energy as an output.

For a DC electrical energy power supply with a constant voltage DC output, its rated output wattage determines the maximum output of DC current at the rated output of constant voltage DC. For example, a constant-voltage DC electrical energy power supply rated at 96 watts and 24 volts DC provides an output electrical energy at a constant DC voltage of 24 volts, and a DC electrical current of 0 to 4 amperes (96 watts/24 volts=4 amperes). The electrical load applied to the output (0-96 watts) of the constant voltage (DC) power supply determines the actual output of DC current from this constant voltage DC electrical energy power supply.

When the DC electrical energy power supply provides a constant voltage DC output, each LED module in the string receives the same DC voltage as input electrical energy to power the LEDs and thereby consumes a certain amount of DC amperage from the DC electrical energy power supply. The maximum number of LED modules that can be powered by this DC electrical energy power supply is determined by the rated DC amperage of each LED module, and the rated output DC wattage and constant DC voltage of the DC power supply. For example, if an LED module is rated at 24 volts and 0.2 amperes DC, a DC electrical energy power supply rated at 24 volts and 96 watts DC can power a maximum of 20 LED modules (96 watts/24 volts/0.2 amperes=20 LED modules).

For a DC electrical energy power supply with a constant current DC output, its rated output wattage determines the maximum output DC voltage at the rated constant current DC output. For example, a constant current DC electrical energy power supply rated at 60 watts and 1 ampere DC, provides an output electrical energy as a constant DC current of 1 ampere, and a DC electrical voltage of 0 to 60 volts (60 watts/1 amp=60 volts). The electrical load applied to the output (0-60 watts) of the constant current DC power supply determines the actual output of DC voltage from this constant current DC electrical energy power supply.

When the DC electrical energy power supply provides a constant current DC output, each LED module in the string of LED modules receives the same DC amperage as input electrical energy to illuminate the LEDs and thereby consumes a certain amount of DC voltage from the DC electrical energy power supply. The maximum number of LED modules that can be powered by this DC electrical energy power supply is determined by the rated DC voltage of each LED module, and the power supply's rated output DC wattage and constant current DC. For example, if an LED module is rated at 0.5 amperes and 3.0 volts DC, a DC electrical energy power supply rated at 0.5 amperes and 60 watts DC can power a maximum of 40 LED modules (60 watts/3.0 volts/0.5 amperes=40 LED modules).

Those of ordinary skill in the art will understand that constant current LED drivers are preferred in the electrical sign industry. A constant current driver varies the voltage across the circuit in order to maintain a constant electrical current. With a constant voltage (CV) driver, small changes in forward voltage can cause large increases in current driven to the LED. Higher current can over-drive the LED if it exceeds the maximum current rating. In the absence of a current limiting device, the current can continue to rise above the maximum limit, especially in higher temperature environments. Excess current creates additional heat and reduce the lifespan of LEDs in a process called thermal runaway. Additionally, differences in current cause changes in brightness which is undesirable in an industry that desires consistent luminosity.

However, the inventor does not want to limit the disclosed system to only constant current power supplies (drivers). There are some circumstances when a constant voltage LED driver is desirable. Some LED modules are designed with built-in current-limiting resistors in line with them to ensure consistent luminosity. Constant voltage drivers provide flexibility to connect LED modules up to the maximum power rating and are available in low-voltage outputs, which is ideal for the sign industry. Additionally, design engineers and installation technicians are more familiar with constant voltage technology and in some instances the cost of production is lower.

### SUMMARY of the Invention

The preferred embodiment of the invention is a power system with a conventional electrical energy power supply, with a current splitting adapter, connected to a string of interconnectable LED modules. The current splitter takes the single DC electrical energy output and splits the current into two electrical channels. The two electrical channels and the common wire connect to a three-pin male connector. The male connector connects to a female connector. The two electrical channels and the common wire run from the female connector to the LED modules. Each LED module can be connected and detached from the other modules by using the three-pin connectors. An end plug is located at the end of the string of LED modules. The end plug brings together the outputs from the last LED module and completes the electrical circuit through a single connection or wire to a common ground at the DC electrical energy power supplies.

Alternate embodiments of the present invention have the same components of the preferred embodiment except for variations in the circuit layout. Some embodiments use a constant current power supply and others use a constant voltage power supply.

### BRIEF DESCRIPTION OF THE DRAWINGS

A better understanding of the present invention may be had from the drawings as described in greater detail in the DETAILED DESCRIPTION OF THE INVENTION section which follows:
FIG. 1 is a schematic diagram of the preferred embodiment of the present invention.
FIG. 2A and FIG. 2B are perspective views illustrating electrical connectors, shown schematically in FIG. 1, in an unconnected and a connected state, respectively.
FIG. 3 is a cross-sectional view of an end plug shown schematically in FIG. 1.
FIG. 4 is a schematic diagram describing an electrical bridge circuit which actuates when one of the individual LEDs is no longer able to pass DC electrical energy.

### Detailed Description of the EMBODIMENTS

For ease of use and incorporation into systems using LEDs to provide light energy, individual LEDs are typically incorporated into various types of LED modules. Such LED modules contain either a single individual LED, multiple individual LEDs in a series connection, multiple individual LEDs in parallel connections, or sets of series-connected individual LEDs in parallel connection.

As previously discussed in the "Background of the Invention," the number of LED modules in the string of LED modules depends on the amount of energy provided by the positive polarity DC electrical energy supply and the amount of electrical energy needed for each individual LED to emit the desired level of light energy.

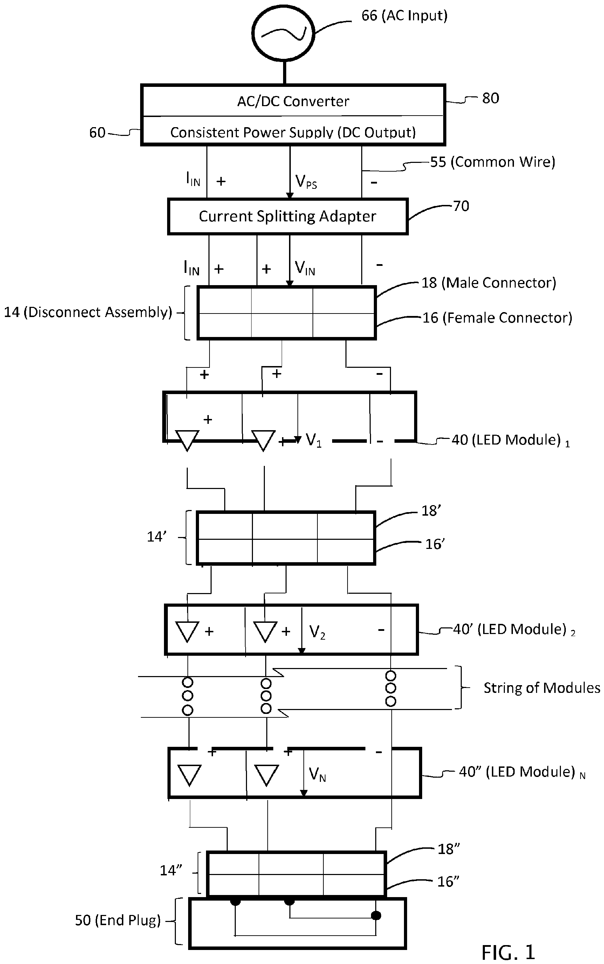

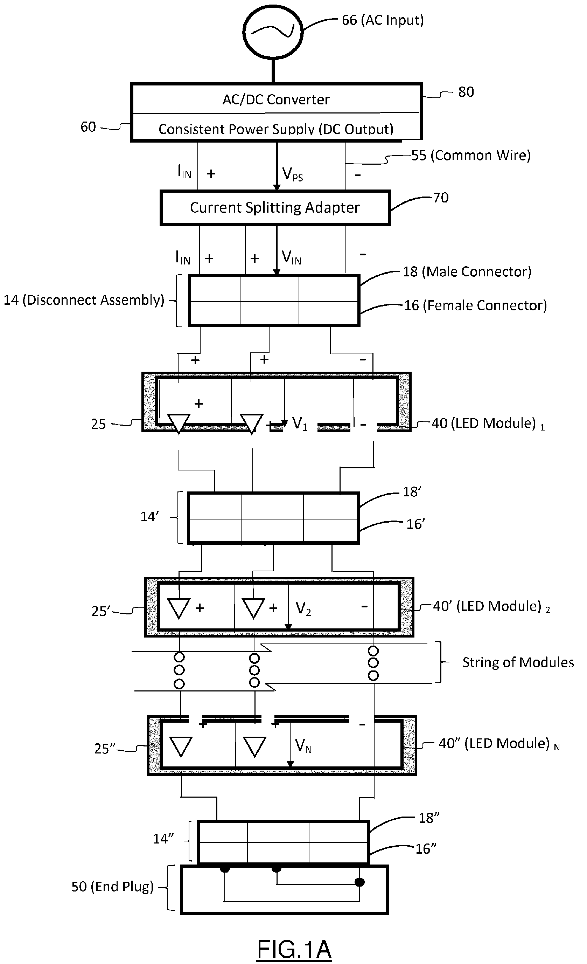

One of the benefits of the present invention is the system can be powered using a conventional power supply. Referring to FIG. 1, a conventional power supply takes an AC input **66** and converts it to DC. Those of ordinary skill in the art will know that the AC input **66** is converted to DC using an AC/DC converter **80**. The AC/DC converter **80** uses a rectifier (not shown) to change the AC input to a DC output. AC/DC converter **80** also uses a transformer (not shown) to reduce the high input voltage to the lower desired voltage.

A preferred embodiment shown in FIG. 1 uses a "consistent power supply." The term "consistent power supply" is defined as a DC power supply that is regulated to provide output that is electrically constant one way or another. Generally, the consistent power supply is regulated to provide either constant current or constant voltage. The present invention does not limit the type of power supply since there are advantages to constant current and constant voltage, depending on the needs of the user. The term "constant current" is frequently used in this description as an example of a preferred embodiment but does not preclude the use of "constant voltage" power supplies in other embodiments.

It should be understood that the described and illustrated embodiments are exemplary in nature and are not meant to limit the disclosed system. The disclosed system may employ either a constant current power supply or a constant voltage power supply, both types of power supplies being within the spirit and scope of the present invention. Referring to the example illustrated in FIG. 1, the consistent power supply is represented by DC electrical energy power supply **60** which is the DC output that exits as a single DC electrical energy current **I_{IN}**. Although only one DC electrical energy power supply **60** is shown in FIG. 1, it should be understood that the multiple such power supplies may be used within the context of the disclosed system, as needed for particular uses.

In the United States, regulations require that the maximum voltage for electrical signs (systems) not exceed 60 volts. When the DC electrical energy power supply **60** provides a constant current DC electrical energy output to a series connection of individual LEDs in the string of LED modules **40, 40', 40"** having multiple LEDs as shown in FIG. 1, this DC constant current **I_{IN}** from the DC electrical energy power supply **60** is equal to the needed DC electrical current through the individual LEDs within each LED module **40, 40', 40"**. The amount of DC voltage required **V_{IN}** is the sum of the voltage requirements (**V₁, V₂, ...Vₙ**) for each LED module **40, 40', 40"** in the string or series of LED modules **40, 40', 40"**. In a circuit with constant current as in FIG. 1, the total voltage is the sum of the voltages across each LED. Therefore, for a group of 3 volt LEDs connected in series, the total amount in the system is limited to 20 LEDs (60/30).

The maximum voltage of 60 volts in the U.S. does not restrict the system from using lower voltage power supplies. For example, for a system of 4 LEDs requiring 3 volts each, the total DC voltage required is 12 volts. For 10 LEDs, the total DC voltage required is 30 volts. The voltage **V_{PS}** of the DC electrical energy power supply **60** can vary so long as 60 volts is not exceeded.

In Europe, the maximum voltage for electrical signs is 220 volts, allowing for more LEDs per system. For example, with 220 volts DC, the maximum number of 3 volt LEDs in a system is 73 (220/3). As in the U.S., lower DC voltage can be used depending on the number of LEDs needed for the electrical system.

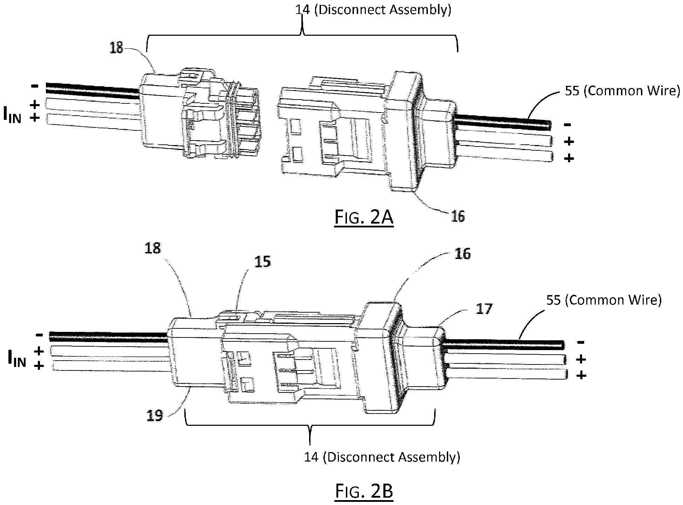

Referring to FIG. 1, the single DC electrical energy output channel has a positive polarity. Therefore, the current **I_{IN}** has a positive polarity and the common wire **55** has a negative polarity. Figures 2-4 also have a positive current **I_{IN}** and a negative polarity common wire **55**. It should be understood that the representations in Figures 1-4 are exemplary references to any number of systems that may be implemented by the present invention. An alternate embodiment to the representations in Figures 1-4 may have a negative current **I_{IN}** and a positive polarity common wire. These representations are not to be construed as limiting the present invention.

For reference purposes, the prime symbol ( ' ) and double prime symbol ( " ) are used to distinguish the disconnect assemblies 14 and LED modules **40** that are identical but are connected in sequence (1...N). For example, the second disconnect assembly is labeled **14'** with the male connector **18'** and the female connector **16'**. The last disconnect assembly **14"** is connected to the end plug **50**. The last LED module (N) in the sequence is labeled as **40"**.

FIG. 1 is a schematic of a lighting assembly for illumination of signage, comprising a string of interconnectable LED modules **40, 40', 40"**, wherein each LED module of at least a subset of the string of interconnectable LED modules **40, 40', 40"** includes the same number of individual LEDs, with each LED module having a positive side and a negative side.

Furthermore, FIG. 1 is a schematic of a preferred embodiment where all of the individual LEDs in each of the LED modules 40, 40', 40" receive a common positive polarity of DC electrical energy and where a single common wire or current path 55 for electrical current is shown on the right side of each schematic. The common wire 55 runs from the end plug **50** at the bottom of the string of interconnectable LED modules **40, 40', 40"** to the common negative polarity of the DC electrical energy power supply **60**. The use of a single common wire or current path **55** minimizes the complexity of the power system of the disclosed system. The common wire **55** is used as the single connection to the common negative polarity of the DC electrical energy power supply **60**. The common wire **55** is "embedded" into the LED modules by an isolated conductive trace, such as a copper trace for example, on a printed circuit board (not shown) inside each LED module **40, 40', 40"**.

The printed circuit board provides mechanical support and DC electrical energy to the LEDs associated with each LED module **40, 40', 40"**. The present invention uses at least one wire for inputting the DC electrical energy to the printed circuit board in the first LED module **40** and outputting the DC electrical energy from the first LED module **40** to the second LED module **40'** and inputting the DC electrical energy to the printed circuit board in the second LED module **40'** and then outputting the DC electrical energy to the next LED module **40"** in the string.

Alternative embodiments of the present invention may include subsets of the string of LED modules **40, 40', 40"** with wires for input and output electrical connections within each individual series connection and a common wire **55** connected to the negative polarity of the DC electrical energy power supply **60**. The common wire **55** may be conducted through an opening in one or more LED modules **40, 40', 40"**. In a particular alternative embodiment shown in FIG. 1A, each LED module **40, 40', 40"** may be mounted in a carrier **25, 25', 25"**, respectively. This alternative embodiment may also have the common wire **55** conducted through an opening in the carrier. The carriers **25, 25', 25"** may also include lenses (not shown) to manage or direct the output of light energy from the LEDs or a clear cover to protect the LEDs.

As shown in FIG. 1, the disclosed system adds a current splitting adapter ("Adapter") **70** between the DC electrical energy power supply **60** and the LED module **40**. The Adapter **70** takes the single DC electrical energy output and splits the current **I_{IN}** into two electrically positive channels. The electrically positive channels and the common wire **55** are attached to a male mating connector **18**, which connects to a female mating connector **16**. In the example shown in FIG. 1, the common wire **55** has a negative polarity. A three-pin disconnect assembly **14** can be detached to vary the number of LED modules interconnected in the string of LED modules. The female mating connector **16** is attached to the input of the LED module **40**. The output of the LED module **40** is connected to another male mating connector **18'**. This pattern continues throughout the system in a daisy-chained string of LED modules.

Since the number of LED modules **40** in the system can vary depending on the DC output voltage, FIG. 1 includes a continuation of the string of LED modules depicted by ellipses. For example, for a constant current system with 2 LEDs per module and 3 volt LEDs, each LED module requires 6 volts. Therefore, the maximum number of LED modules in the system is 10 (60/10). The number of LED modules will also vary for a system with a constant voltage DC power supply.

As shown in FIG. 1, immediately above the first LED module **40** in the string of LED modules closest to the DC electrical energy power supply **60** is a first type of mating connector **16**. Immediately below the first LED module **40** is a second type of mating connector **18**. The first LED module **40** is connected to a second LED module **40'** by the interconnection of the second type of mating connector **18** on the output side of the first LED module **40** to a first type of mating connector **16** on the input side of the second LED module **40'**. Repeating such type of connections between LED modules will enable the formation of a string of LED modules **40, 40', 40"** by repeating the connection between the first LED module **40** and second LED module **40'** until the string of LED modules is completed.

Referring to FIG. 2A and FIG. 2B, the purpose of mating connectors **16, 18** is to allow for easy separation of the LED modules to adjust the quantity of LED modules or to replace one or more LED modules. The mating connectors **16, 18** also allow separation of the DC electrical energy output **60** and the end plug **50** from the string of LED modules, shown in FIG. 1. The disclosed system has a first type of mating connector **16** for receiving the DC electrical energy. The first type of mating connector is preferably connected to at least one wire inputting DC electrical energy to the printed circuit board in the first LED module **40**. The disclosed system has a second type of mating connector **18**, wherein the second type of mating connector **18** is connected to at least one wire for outputting the DC electrical energy from the first LED module **40** to a second LED module **40'**. The interconnection of the first LED module **40** and the second LED module **40'** constitute a subset of LED modules. This subset of LED modules can then be interconnected with another LED module **40"** by interconnecting the second type of mating connector **18** on the output side of the second LED module **40'** with a first type of mating connector **16** on the input side of the other LED module **40"**.

The first type of electrical connector **16** is a female type of electrical connector and the second type of electrical connector **18** is a male type of electrical connector as shown in FIG. 2B. While male and female connectors are shown as the first and second type of mating electrical connectors respectively in the preferred embodiment, those of ordinary skill in the art will understand that the use of female and male mating electrical connectors as the first and second type of mating electrical connectors will not affect the electrical operation of the string of LED modules.

As seen in FIG. 2A and in FIG. 2B, the design of the housing of the first and second type of mating connectors **16, 18** enables a snap fit connection **17** between the first and second type of mating connectors **16, 18**. In addition, the outside portion of the male and female connectors may include protrusions for frictionally holding the interconnected male and female connectors in place if the string of LED modules is placed within a channel such as a channel used to form a letter in an illuminated sign. As an example, latch mechanism **15** including protrusions is located on the side of the male side of the connector.

Those of ordinary skill in the art will understand that a variety of different connectors may be used in addition to the ones illustrated in FIG. 2A and FIG. 2B. At the bottom of the male side **18** of the separable mechanical connector is another strain relief **19** which surrounds the three separable leads exiting from the male side of the separable mechanical connector. It has also been found that if both the female side of the separable mechanical connector and the male side of the separable mechanical connector include an arrow formed or printed thereon, which arrows follow the path of the flow of direct current electrical energy, the assembly of the LED module into a string of LED modules is made easier for the one who puts together the string of LED modules.

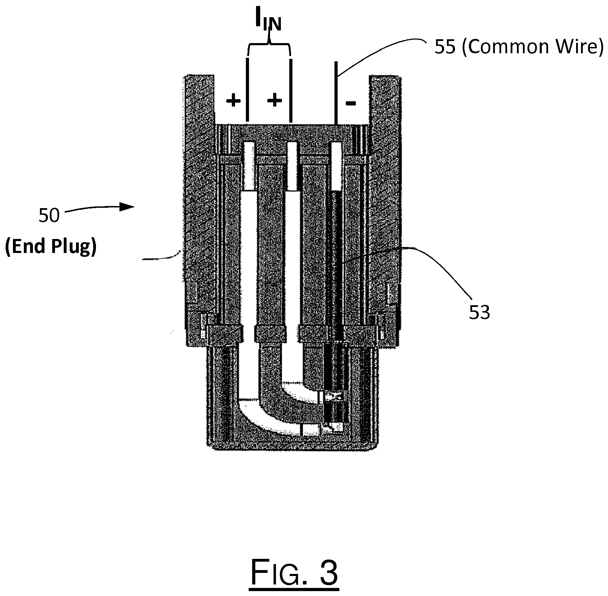

At the end of the string of LED modules is an end plug **50**, shown in further detail in FIG. 3. The cross-section of the end plug **50** shows where two outputs from the LEDs in the last LED module 40" in the illustrated string of LED modules are combined into a common conductor **53**. The common conductor **53** is connected to the common wire **55**. Accordingly, the electrical circuit at each DC electrical energy power supply **60** is completed.

The preferred embodiment includes an end plug **50** connecting the electrical output of each of said individual LED series connections from the last LED module **40**" in the string of LED modules, to the output at a negative electrical polarity from each of said two electrically positive channels that powers the same individual LED series connection to complete the electrical circuits for all DC electrical energy channels, the end plug **50** being located on the output side of the last LED module **40"** being the farthest electrically connected to the DC electrical energy channels.

An alternative embodiment may have an end plug **50** connecting the electrical output of each of the individual LED series connections from the last LED module **40"** in the string of LED modules, to the output at a positive electrical polarity from each of the two electrically negative channels that powers the same individual LED series connection to complete the electrical circuits for all DC electrical energy channels, the end plug **50** being located on the output side of the last LED module 40" being the farthest electrically connected to said DC electrical energy channels.

The end plug **50** provides an advantage because it eliminates the need for two wires to run from the last LED module 40" back to the DC electrical energy power supply **60**. In small electrical signs using LEDs, reducing the amount of wires is highly beneficial.

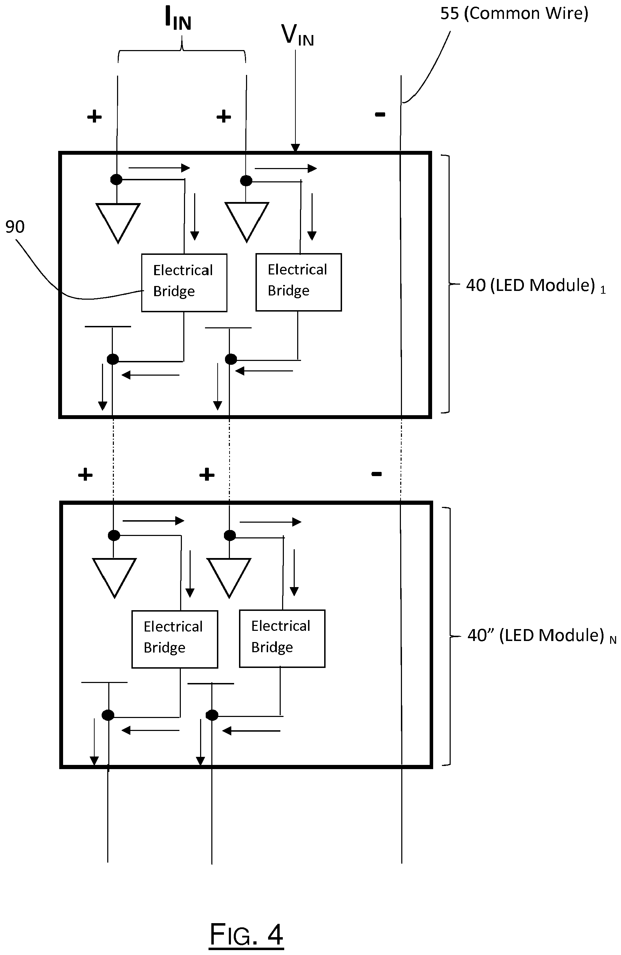

FIG. 4 includes two LEDs per LED module and details the components as they pertain to the present invention illustrated in FIG. 1. Those of ordinary skill in the art will understand that when LEDs are connected into a DC series electrical circuit, one of the LEDs with an open-circuit failure will open the DC series electrical circuit so that no DC electrical energy will pass through the electrical circuit. In this case, an electrical bridge circuit **90** is connected in parallel with each individual LED. The electrical bridge circuit activates when one of the individual LEDs is no longer able to pass DC electrical energy. Thereby, the DC electrical energy can pass through the electrical bridge circuit **90** instead and flow to the remaining operational LEDs to continue emitting light energy. Such electrical bridge circuit **90** typically includes a Zener diode.

Although the present invention has been described in terms of the foregoing preferred and alternative embodiments, these descriptions and embodiments have been provided by way of explanation of examples only, in order to facilitate understanding of the present invention. As such, the descriptions and embodiments are not to be construed as limiting the present invention, the scope of which is limited only by the claims of this and any related patent applications and any amendments thereto. Furthermore, it will be understood by those of skill in the art that any combination of embodiments, and capabilities associated with those embodiments, may be incorporated into one embodiment.

Those of ordinary skill in the art will understand that the disclosed invention may include other changes and modifications known to those of ordinary skill in the art. Such changes and modifications shall be included within the scope and meaning of the appended claims.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A lighting assembly for illumination of signage, comprising a string of interconnectable LED modules, wherein each LED module of at least a subset of said string includes the same number of individual LEDs, each said LED module having a positive side and a negative side, said lighting assembly comprising:
a) a conventional power supply, said conventional power supply having a single alternating current (AC) electrical energy input and a single direct current (DC) electrical energy output channel;
b) wherein said power supply is a consistent power supply;
c) wherein each of the individual LEDs in said string of LED modules is directly electrically connected in series to an individual LED contained in a next LED module, thereby forming a number of individual LED series connections across all LED modules that is equal to the number of individual LEDs contained in each LED module;
d) wherein said subset of LED modules comprises a plurality of LED modules wherein said plurality of LED modules includes at least a first LED module and a second LED module;
e) wherein said first LED module and said second LED module include a printed circuit board providing mechanical support and DC electrical energy to the LEDs;
f) at least one wire for inputting the DC electrical energy to said printed circuit board in said first LED module and outputting said DC electrical energy from said first LED module to said second LED module and inputting said DC electrical energy to said printed circuit board in said second LED module and then outputting said DC electrical energy to another LED module; and
g) a current splitting adapter located between the DC electrical energy output and the first said LED module, that takes the single DC electrical energy output and splits the current into two electrical channels, wherein said two electrical channels and a common wire are attached to a mating connector;
h) a first type of mating connector for receiving said DC electrical energy, said first type of mating connector connected to said at least one wire inputting DC electrical energy to said printed circuit board in said first LED module;
i) a second type of mating connector, said second type of mating connector connected to said at least one wire for outputting said DC electrical energy from said first LED module to said second LED module; and
j) whereby said subset of LED modules is interconnected with another LED module by interconnecting said second type of mating connector with a first type of mating connector on said another LED module.

2. The lighting assembly as defined in claim 1 wherein:
a) said single direct current (DC) electrical energy output channel has a positive polarity;
b) said current splitting adapter takes the positive polarity single DC electrical output and splits the current into two electrically positive channels; and
c) said two electrically positive channels have a positive polarity and the common wire has a negative polarity.

3. The mating connectors as defined in claim 1 wherein said first type of mating connector is a female connector and said second type of mating connector is a male connector.

4. The mating connectors as defined in claim 1 wherein said first type of mating connector and said second type of mating connector snap fit together.

5. The lighting assembly as defined in claim 2 wherein said subset of said string includes wires for input and output electrical connections within each individual series connection and a common wire connected to the negative polarity of said power supply.

6. The lighting assembly as defined in claim 5 wherein said common wire is electrically connected to an isolated conductive trace on each printed circuit board in one or more LED modules.

7. The lighting assembly as defined in claim 5 wherein said common wire is conducted through an opening in one or more LED modules.

8. The lighting assembly as defined in claim 5 wherein each LED module is mounted in a carrier, and said common wire is conducted through an opening in said carrier.

9. The lighting assembly as defined in claim 2 further including an end plug connecting the electrical output of each of said individual LED series connections from the last LED module in said string, to the output at a negative electrical polarity from each of said two electrically positive channels that powers the same individual LED series connection to complete the electrical circuits for all DC electrical energy channels, said end plug being located on the output side of the last LED module being the farthest electrically connected to said DC electrical energy channels.

10. The lighting assembly as defined in claim 1 wherein:
a) said single direct current (DC) electrical energy output channel has a negative polarity;
b) said current splitting adapter takes the negative polarity single DC electrical output and splits the current into two electrically negative channels; and
c) said two electrically negative channels have a negative polarity and the common wire has a positive polarity.

11. The lighting assembly as defined in claim 11 wherein said subset of LED modules includes wires for input and output electrical connections within each individual series connection and a common wire to the positive polarity of said power supply.

12. The lighting assembly as defined in claim 12 wherein said common wire is electrically connected to an isolated conductive trace on each printed circuit board in one or more LED modules.

13. The lighting assembly as defined in claim 12 wherein said common wire is conducted through an opening in one or more LED modules.

14. The lighting assembly as defined in claim 12 wherein each LED module is mounted in a carrier, and said common wire is conducted through an opening in said carrier.

15. The lighting assembly as defined in claim 11 further including an end plug connecting the electrical output of each of said individual LED series connections from the last LED module in said string, to the output at a positive electrical polarity from each of said two electrically negative channels that powers the same individual LED series connection to complete the electrical circuits for all DC electrical energy channels, said end plug being located on the output side of the last LED module being the farthest electrically connected to said DC electrical energy channels.
